# DEMANDE DE BREVET EUROPEEN

(11) **EP 1 921 558 A1**
(43) Date de publication de la demande: **14.05.2008**
(21) Numéro de dépôt: 06291231.6
(22) Date de dépôt: 28.07.2006
(51) Int. Cl.: G06F 21/20

(54) **Procédé d'authentification**

(71) Demandeur: GEMPLUS, 13420 Gémenos (FR)
(72) Inventeur: Chew, Gary, 13090 Aix-en-Provence (FR)
(74) Mandataire: Bredema

(57) **Abrégé**

L'invention se rapporte à un procédé d'authentification d'une session entre un premier utilisateur (4), et un équipement informatique à authentifier (1), l'équipement informatique à authentifier étant apte à générer des identifiants d'équipement informatique à authentifier, le procédé comprenant des étapes dans lesquelles:
- une session de communication est ouverte (10, 11, 13, 19) entre l'équipement informatique à authentifier et le premier utilisateur ;
- l'équipement informatique à authentifier génère (14, 20) un identifiant d'équipement informatique à authentifier, l'identifiant étant fonction de ladite session ;
- l'équipement informatique à authentifier fournit (15, 21) l'identifiant d'équipement informatique à authentifier au premier utilisateur ;
- l'utilisateur authentifie (16, 27) l'équipement informatique à authentifier en fonction de l'identifiant d'équipement informatique à authentifier (I₂);

caractérisé en ce que, l'identifiant d'équipement informatique à authentifier (I₂) est un identifiant unique de la session.

## Description

La présente invention se rapporte à un procédé d'authentification d'une session entre un utilisateur et un équipement informatique.

Il existe de nombreuses situations dans lesquelles un utilisateur, utilisant par exemple un équipement informatique, se connecte sur un serveur informatique pour réaliser différentes opérations. Ces opérations sont parfois sensibles et peuvent correspondre par exemple à des opérations bancaires, d'échanges de données personnelles ou de dossiers médicaux. Dans de nombreux procédés d'authentification, l'utilisateur doit s'authentifier au niveau du serveur, par exemple en transmettant un code connu uniquement de l'utilisateur et du serveur permettant de réaliser ou d'enregistrer l'opération.

Toutefois, si l'authentification de l'utilisateur permet d'assurer l'identité de l'utilisateur, l'identité du serveur, n'est pas assurée par de tels procédés.

En effet, il existe des procédés frauduleux dans lesquels un utilisateur, croyant être connecté à un serveur bancaire correspondant à sa banque, est en fait connecté à un serveur pirate. Les informations échangées lors de la connexion à ce serveur pirate peuvent donc être frauduleusement récupérées. Ainsi, lors de la connexion d'un utilisateur à un serveur distant, il est important pour le serveur d'authentifier l'utilisateur, mais il est également important pour l'utilisateur, d'authentifier le serveur.

À ce titre, l'invention concerne un procédé d'authentification d'une session entre un premier utilisateur, et un équipement informatique à authentifier, ledit équipement informatique à authentifier étant apte à générer des identifiants d'équipement informatique à authentifier, ledit procédé comprenant des étapes dans lesquelles:
- une session de communication est ouverte entre ledit équipement informatique à authentifier et ledit premier utilisateur ;
- ledit équipement informatique à authentifier génère un identifiant d'équipement informatique à authentifier, ledit identifiant étant fonction de ladite session ;
- ledit équipement informatique à authentifier fournit ledit identifiant d'équipement informatique à authentifier audit premier utilisateur ;
- ledit utilisateur authentifie ledit équipement informatique à authentifier en fonction dudit identifiant d'équipement informatique à authentifier.

La demande internationale WO 2006/028488 décrit un tel procédé dans lequel, lorsqu'un utilisateur, après s'être identifié à l'aide de données d'identification, demande une connexion à un site Internet, une information personnalisée fonction des données d'identification lui est présentée. Cette information personnalisée peut être reconnaissable par au moins un des cinq sens de l'être humain, c'est-à-dire la vue, le goût, le toucher, l'ouïe ou l'odorat. Cette information personnalisée est échangée avec l'utilisateur lors de sa première connexion avec le site sécurisé, ou avec un site de pré-enregistrement. Une fois cette information personnalisée acquise par l'utilisateur, celui-ci ne considèrera le site visité comme authentique que lorsque cette information personnalisée apparaît.

On comprend que cette information personnalisée fournie par le site visité à l'utilisateur, apparaît comme une information a priori secrète, et partagée uniquement entre le site et l'utilisateur. Pour l'identification d'un utilisateur, on comprend également qu'il est possible d'utiliser comme information secrète, un code alphanumérique, qui est traité et reconnu par le site, grâce aux capacités de calcul et de traitement du serveur associé au site. Par contre, pour l'authentification du site par l'utilisateur, de tels codes alphanumériques ne sont pas avantageux à cause du défaut de moyens de traitement informatique du côté de l'utilisateur. La demande internationale précitée propose donc avantageusement une possibilité d'identification basée sur les cinq sens disponibles à l'utilisateur, au lieu d'un simple code alphanumérique.

Cette information personnalisée peut être statique, c'est-à-dire qu'elle peut être déterminée une seule fois et rester identique pour toutes les sessions de connexion future de l'utilisateur. Elle peut être également pseudo-dynamique, c'est-à-dire qu'elle peut varier en fonction de la date de la connexion de l'utilisateur. Dans la demande internationale précitée, un exemple d'information personnalisée pseudo-dynamique correspond à une formule variable du type « Nous sommes le @date », dans laquelle le terme « @date » varie en fonction de la date de la connexion.

Toutefois, on comprend que de tels procédés d'authentification ont des inconvénients.

D'abord, lorsque l'information personnalisée est statique, si l'information personnalisée est interceptée par un tiers, ce tiers pourra reproduire l'information personnalisée lors d'une prochaine connexion, et donc simuler, avec un site frauduleux, le site non frauduleux censé présenter à l'utilisateur l'information personnalisée lors de la connexion.

Cet inconvénient est également présent si les informations personnalisées sont pseudo-dynamiques. En effet, les informations pseudo-dynamiques décrites dans la demande internationale précitée, varient certes en fonction de la date de connexion, mais le format de l'information reste statique. On comprend donc qu'un tiers découvrant le format des données et la fonction de variation des données puisse frauduleusement afficher une telle information pseudo-dynamique.

La sécurité du procédé d'authentification décrit dans la demande internationale WO 2006/028488 n'est donc pas satisfaisante.

L'invention vise notamment à pallier ces inconvénients.

Un premier but de l'invention est de fournir un procédé permettant à un utilisateur désirant se connecter à un équipement informatique, d'authentifier cet équipement informatique.

Un autre but de l'invention est de fournir un procédé permettant à un utilisateur désirant se connecter à un équipement informatique, d'authentifier cet équipement informatique, cette authentification étant simple et rapide pour l'utilisateur.

Un autre but de l'invention est de fournir un procédé permettant à un utilisateur désirant se connecter à un équipement informatique, d'authentifier cet équipement informatique, les possibilités de fraude sur l'identité de l'équipement informatique étant réduites.

Au moins un de ces buts est atteint par l'invention qui se rapporte à un procédé d'authentification d'une session entre un premier utilisateur, et un équipement informatique à authentifier, ledit équipement informatique à authentifier étant apte à générer des identifiants d'équipement informatique à authentifier, ledit procédé comprenant des étapes dans lesquelles:
- une session de communication est ouverte entre ledit équipement informatique à authentifier et ledit premier utilisateur ;
- ledit équipement informatique à authentifier génère un identifiant d'équipement informatique à authentifier, ledit identifiant étant fonction de ladite session ;
- ledit équipement informatique à authentifier fournit ledit identifiant d'équipement informatique à authentifier audit premier utilisateur ;
- ledit utilisateur authentifie ledit équipement informatique à authentifier en fonction dudit identifiant d'équipement informatique à authentifier;
dans lequel, ledit identifiant d'équipement informatique à authentifier est un identifiant unique de ladite session.

De la sorte, à chaque session de communication entre le premier utilisateur et l'équipement informatique à authentifier, un identifiant unique est généré au niveau de l'équipement informatique à authentifier. Selon l'invention, le premier utilisateur a également connaissance de cet identifiant unique pour chaque session, et peut donc authentifier l'équipement informatique à authentifier.

Par ailleurs, l'identifiant d'équipement informatique à authentifier étant associé de façon unique à la session entre l'utilisateur avec l'équipement informatique, l'interception d'un identifiant ne permet pas une fraude ultérieure. L'aspect dynamique de l'identifiant unique de session permet donc d'améliorer la sécurité de l'authentification de l'équipement informatique à authentifier.

Selon un mode de réalisation de l'invention, ledit identifiant d'équipement informatique à authentifier peut être reconnaissable par ledit premier utilisateur, à l'aide d'au moins un des cinq sens parmi la vue, le toucher, l'ouïe, l'odorat et le goût.

Ainsi, l'identifiant étant basé sur l'un au moins des cinq sens fondamentaux de l'être humain, l'utilisateur n'a pas à réaliser d'opérations complexes et longues afin d'authentifier l'équipement informatique à authentifier.

Toujours dans ce mode de réalisation, ledit identifiant d'équipement informatique à authentifier peut être une image.

Aux fins de la présente demande, une image est une représentation visuelle d'un objet par différents moyens ou supports, dessin, image numérique, peinture, photographie. En pratique, il s'agit souvent d'un fichier permettant de stocker un graphique dont le format varie le plus souvent entre le BMP, acronyme anglais pour « Basic Multilingual Plane », le GIF acronyme anglais pour « Graphic Interchange Format », le JPEG, acronyme anglais pour « Joint Photographic Experts Group » ou le TIFF, acronyme anglais pour « Tagged Image File Format ».

Ce mode de réalisation permet d'éviter les inconvénients des authentifications par génération de codes alphanumériques.

En effet, la comparaison par l'utilisateur d'une pluralité de caractères alphanumériques est parfois difficile pour l'utilisateur, et ce d'autant plus que le nombre de caractères est élevé. En effet, l'utilisateur, en tant qu'être humain, ne possède pas les capacités de calcul d'un équipement informatique, et les procédés d'authentification de l'utilisateur par un équipement informatique ne sont donc pas utilisables pour l'authentification d'un équipement informatique par un utilisateur.

Par ailleurs, l'identification d'un code alphanumérique ne permet pas une comparaison globale du code. Elle doit se faire caractère par caractère, ce qui peut être long et fastidieux, et ce d'autant plus que le nombre de caractères est élevé.

En outre, les interfaces affichant de tels codes alphanumériques sont le plus souvent petit et sans couleur, ce qui rend difficile une éventuelle authentification par un utilisateur de ces codes.

Ce mode de réalisation de l'invention permet de pallier ces inconvénients.

En outre, afin de faciliter la reconnaissance par l'utilisateur de l'identifiant d'équipement informatique à authentifier fourni par l'équipement informatique à authentifier, le procédé susmentionné peut comprendre des étapes dans lesquelles:
- ledit premier utilisateur sélectionne une catégorie d'identifiants ;
- ledit équipement informatique à authentifier génère ledit identifiant d'équipement informatique à authentifier, ledit identifiant d'équipement informatique à authentifier appartenant à ladite catégorie d'identifiants.

De la sorte, l'utilisateur peut choisir les identifiants qui facilitent le mieux son authentification ou son refus d'authentification de l'équipement informatique à authentifier. Par exemple, l'utilisateur peut sélectionner une catégorie d'images correspondant à des personnages célèbres s'il sait qu'il distingue facilement de tels personnages.

Selon un mode de réalisation de l'invention, dans le procédé susmentionné, ledit premier utilisateur peut avoir un équipement informatique d'authentification et ledit procédé peut comprendre des étapes dans lesquelles:
- ledit équipement informatique d'authentification génère un identifiant d'équipement informatique d'authentification;
- ledit identifiant d'équipement informatique d'authentification est transmis audit équipement à authentifier;
- ledit équipement informatique à authentifier génère ledit identifiant unique de session de d'équipement informatique à authentifier en fonction dudit identifiant d'équipement informatique d'authentification;
- ledit équipement informatique d'authentification génère un identifiant unique de session d'équipement informatique d'authentification en fonction dudit identifiant d'équipement informatique d'authentification;
procédé dans lequel lors de l'étape d'authentification, ledit utilisateur compare ledit identifiant unique de session d'équipement informatique d'authentification et ledit identifiant unique de session d'équipement informatique à authentifier.

Selon ce mode de réalisation, l'authentification est réalisée par l'utilisateur en comparant l'identifiant unique de session d'équipement informatique à authentifier à un identifiant unique de session d'équipement informatique d'authentification. L'authentification sera alors réalisée si le résultat de la comparaison est favorable.

Dans ce mode de réalisation, ledit premier utilisateur peut avoir un équipement informatique d'authentification et ledit équipement informatique d'authentification peut comprendre au moins une mémoire dans laquelle est chargé un algorithme de génération d'identifiants de session d'équipement informatique d'authentification, ledit équipement informatique à authentifier peut comprendre au moins une mémoire dans laquelle est chargé un algorithme de génération d'identifiants de session d'équipement à authentifier, ledit algorithme de génération d'identifiant d'équipement informatique d'authentification et ledit algorithme de génération d'identifiant d'équipement à authentifier étant identiques, et dans lequel ledit procédé peut comprendre des étapes dans lesquelles :
- ledit algorithme de génération d'identifiant de session d'équipement informatique d'authentification génère ledit identifiant de session d'équipement informatique d'authentification ;
- ledit algorithme de génération d'identifiant de session de d'équipement à authentifier génère ledit identifiant de session d'équipement à authentifier.

Aux fins de la présente demande, on considèrera que deux algorithmes sont identiques s'ils permettent de générer deux paramètres de sortie identiques lorsqu'ils reçoivent en entrée des paramètres identiques.

L'algorithme de génération d'identifiant d'équipement informatique d'authentification et ledit algorithme de génération d'identifiant de l'équipement à authentifier peuvent être synchronisés, soit temporellement soit en fonction d'un compteur, de sorte que les mêmes identifiants sont générés par l'équipement informatique d'authentification et l'équipement informatique à authentifier lors d'une demande de connexion de l'utilisateur. Le fait que les deux identifiants soient identiques garantit alors à l'utilisateur que l'équipement informatique à authentifier comprend un algorithme de génération d'identifiant identique à celui de son équipement informatique d'authentification, et peut donc authentifier l'équipement informatique à authentifier.

Selon un autre mode de réalisation de l'invention, dans le procédé susmentionné, ledit équipement informatique à authentifier peut être détenu par un deuxième utilisateur ayant des paramètres de deuxième utilisateur, ledit procédé pouvant comprendre des étapes dans lesquelles:
- ledit équipement informatique à authentifier transmet ledit identifiant unique de session d'équipement informatique à authentifier à un équipement informatique de recherche ainsi que lesdits paramètres de deuxième utilisateur, lesdits paramètres de deuxième utilisateur étant associés de façon unique audit identifiant unique de session d'équipement informatique à authentifier ;
- ledit premier utilisateur recherche au niveau dudit équipement informatique de recherche, ledit identifiant unique de session d'équipement informatique à authentifier ;
- ledit équipement informatique de recherche fournit audit premier utilisateur lesdits paramètres de deuxième utilisateur associés audit identifiant unique de session d'équipement informatique à authentifier.

Dans ce cas, l'équipement informatique d'authentification est par exemple un téléphone mobile, et l'équipement informatique à authentifier est également un téléphone mobile. De la sorte, lorsque l'utilisateur de l'équipement informatique d'authentification désire rapidement s'authentifier auprès du deuxième utilisateur, il lui fournit son identifiant unique de session d'équipement informatique à authentifier. Selon l'invention, cet identifiant est simple à mémoriser, et le premier utilisateur peut facilement se rappeler la nature de l'identifiant. Selon ce mode de réalisation, l'équipement informatique à authentifier transmet également l'identifiant à un équipement informatique de recherche, qui joue le rôle de serveur de stockage d'identifiant. Ce serveur de stockage stocke également des paramètres personnels de l'utilisateur ayant transmis l'identifiant. Le premier utilisateur peut alors se connecter à ce serveur pour retrouver des paramètres du premier utilisateur, à l'aide de l'identifiant qu'il a facilement mémorisé.

Ce mode de réalisation peut être avantageusement utilisé afin d'établir un contact entre un premier utilisateur et un deuxième utilisateur, sans toutefois fournir de paramètres personnels lors de la première rencontre.

On décrit maintenant au moins un mode de réalisation de l'invention en référence aux figures annexées dans lesquelles :
- FIG. 1 est une représentation schématique d'une architecture destinée à la mise en oeuvre d'un mode de réalisation de l'invention ;
- FIG. 2 est une représentation schématique des étapes du procédé selon un mode de réalisation de l'invention ;
- FIG. 3 est une représentation schématique d'une architecture destinée à la mise en oeuvre d'un autre mode de réalisation de l'invention ;
- FIG. 4 est une représentation schématique des étapes du procédé selon un mode de réalisation de l'invention.

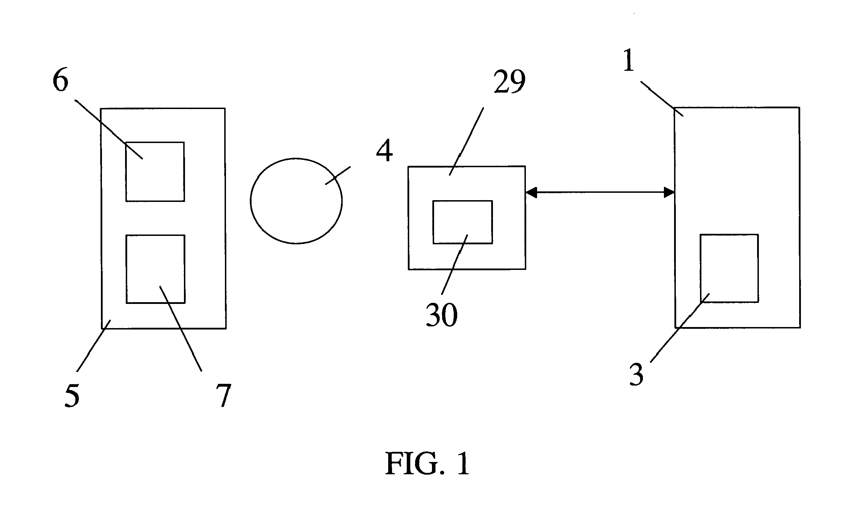

Comme illustré FIG. 1, un premier mode de réalisation de la présente invention peut être mis en oeuvre dans un système comprenant un équipement informatique d'authentification 5, associé à un premier utilisateur 4. Cet équipement informatique d'authentification comprend au moins des mémoires 7, et un écran d'affichage 6. Les mémoires 7 peuvent comprendre des programmes destinés à mettre en oeuvre les procédés qui seront décrits plus en détail par la suite, à l'aide d'un processeur, non représenté. L'équipement informatique 5 est par exemple un téléphone mobile.

Un deuxième équipement informatique 1 est l'équipement informatique à authentifier. Il comprend également des mémoires 3. Les mémoires 3 peuvent comprendre des programmes destinés à mettre en oeuvre les procédés qui seront décrits plus en détail par la suite, à l'aide d'un processeur, non représenté. L'équipement informatique 1 est par exemple un serveur 1 dans lequel sont stockées des pages Internet auxquelles l'utilisateur 4 souhaite accéder, ou sur lesquelles il souhaite saisir des informations confidentielles. L'utilisateur peut accéder au contenu de l'équipement informatique 1 par l'intermédiaire d'un poste d'accès 29 pouvant recevoir des données de l'équipement informatique 1. Ce poste d'accès 29 comprend un écran d'affichage 30 pour afficher les données reçues de l'équipement informatique 1. Les données transmises à l'utilisateur 4 sont alors accessibles à ce dernier par l'intermédiaire du poste d'accès 29. Le poste d'accès 29 est par exemple un ordinateur personnel.

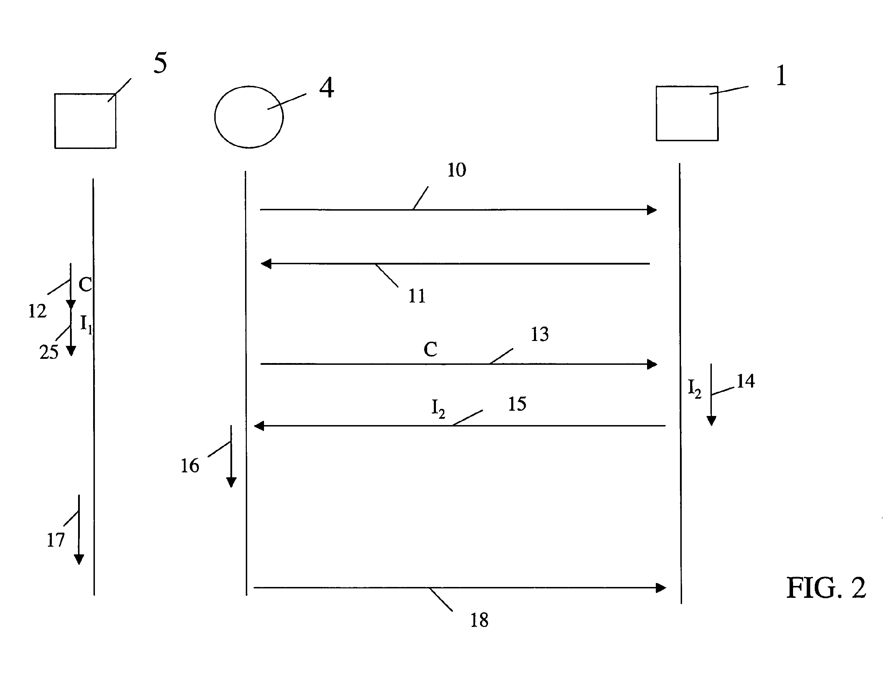

On décrit maintenant un procédé d'authentification de l'équipement informatique 1 par l'utilisateur 4 en référence à la FIG. 2.

La FIG. 2 représente un schéma du procédé d'authentification de l'équipement informatique 1 par l'utilisateur 4 en possession d'un équipement informatique 5.

Illustré FIG. 2, l'utilisateur 4 émet 10 une demande de connexion au serveur 1, par exemple réalisant un appel à une URL correspondant à l'adresse du serveur 1.

En retour, le serveur 1 fournit 11 à l'utilisateur une page d'accueil pour qu'il s'authentifie auprès du serveur 1.

L'utilisateur 4 utilise alors son équipement informatique 5 pour générer 12 des paramètres d'authentification C, comprenant par exemple un nom d'utilisateur et un mot de passe. L'utilisateur 4 fournit 13 ces paramètres d'authentification C au serveur 5, par exemple par l'intermédiaire d'une zone de saisie.

L'équipement informatique génère ensuite 14, un identifiant unique de session I₂ associé de façon unique à la session entre l'utilisateur 4 et l'équipement 1. Cet identifiant unique est par exemple généré à l'aide d'un algorithme stocké dans une des mémoires 3 de l'équipement 1, et prenant en entrée les paramètres d'authentification C générées par l'équipement 5.

L'identifiant unique de session I₂ est ensuite transmis 15 à l'utilisateur 4, par l'intermédiaire du poste d'accès 29 L'identifiant unique de session I₂ peut être sous la forme d'une image, d'un son, d'une odeur, d'une forme, ou d'une substance ayant un certain goût. De la sorte, cet identifiant unique de session I₂ est adapté aux possibilités de reconnaissance de l'utilisateur 4, qui est un être humain. Cet identifiant unique de session I₂ est donc reconnaissable par au moins un des cinq sens disponible pour un être humain.

L'équipement informatique 5 génère également 25 un identifiant unique de session I₁ associé de façon unique à la session entre l'utilisateur 4 et l'équipement 1. Cet identifiant unique est par exemple généré à l'aide d'un algorithme stocké dans une des mémoires 7 de l'équipement 5, et prenant en entrée les paramètres d'authentification C générées par l'équipement 5.

L'identifiant unique de session I₁ est du même type que l'identifiant de session I₂.
Si le serveur 1 est un serveur non frauduleux, les algorithmes servant à générer les identifiants uniques I₁ et I₂ sont identiques, c'est-à-dire qu'ils génèrent les mêmes identifiants uniques lorsqu'ils reçoivent en entrée les mêmes paramètres C.

Ces algorithmes peuvent par exemple avoir été échangés préalablement à la mise en oeuvre du procédé selon l'invention,

Une telle génération parallèle d'identifiants unique de session est connue par exemple dans le domaine bancaire, sous la forme de mots de passe à usage unique, ou OTP en anglais pour « One-Time Password ». Les algorithmes chargés dans les mémoires des équipements 1 et 5 sont alors synchronisés, soit à l'aide d'un compteur, soit de façon temporelle, pour générer des identifiants, uniques pour chaque session, mais identiques lorsque les paramètres de l'utilisateur 4 sont fournis en entrée de ces algorithmes.

L'utilisateur 4, en possession de l'équipement 5 prend alors connaissance de l'identifiant unique I₁ et le compare 16 à l'identifiant unique I₂. En cas de comparaison favorable, l'utilisateur 4 sait donc que l'équipement informatique 1 auquel il désire se connecter et son équipement informatique 5 partagent le même algorithme de génération d'identifiant unique, et authentifie donc par ce biais l'équipement informatique 1.

Lorsque les identifiants I₁ et I₂ sont des images, l'étape d'authentification 16 peut être très rapide pour l'utilisateur 4, qui n'a qu'à comparer visuellement sur les écrans 6 et 31, les deux images I₁ et I₂.

Une fois l'authentification réalisée, l'équipement 5 peut en outre générer de nouveaux paramètres d'identification de l'utilisateur, que ce dernier fournit 18 à l'équipement 1 pour réaliser la connexion.

Selon une variante de ce mode de réalisation, l'équipement 5 peut recevoir des données de l'équipement informatique 1. Les données de l'équipement informatique 1 sont alors transmises à l'équipement 5, et l'utilisateur 4 peut accéder à ces données, et notamment à l'identifiant I₂ par l'intermédiaire de l'écran 6.

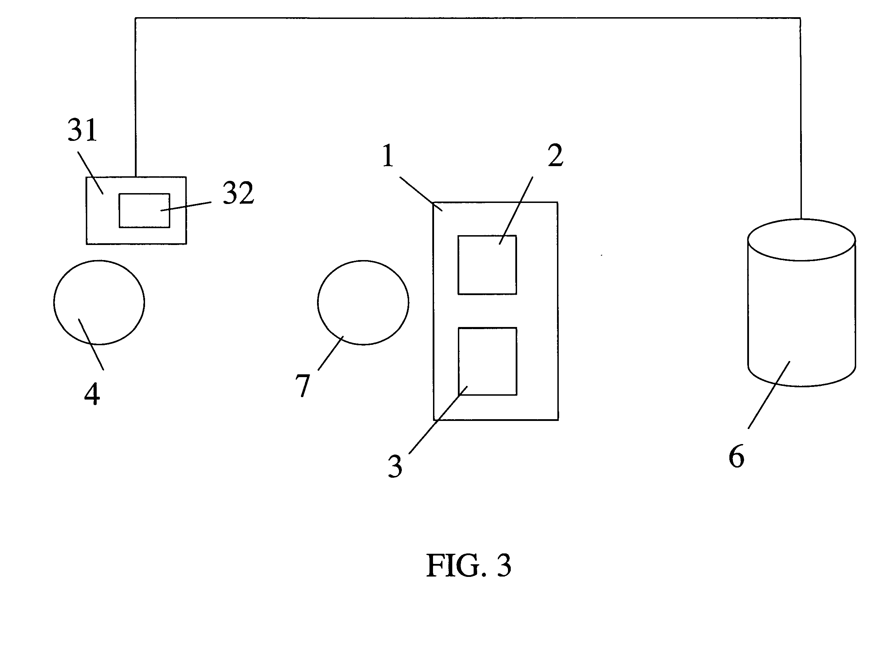

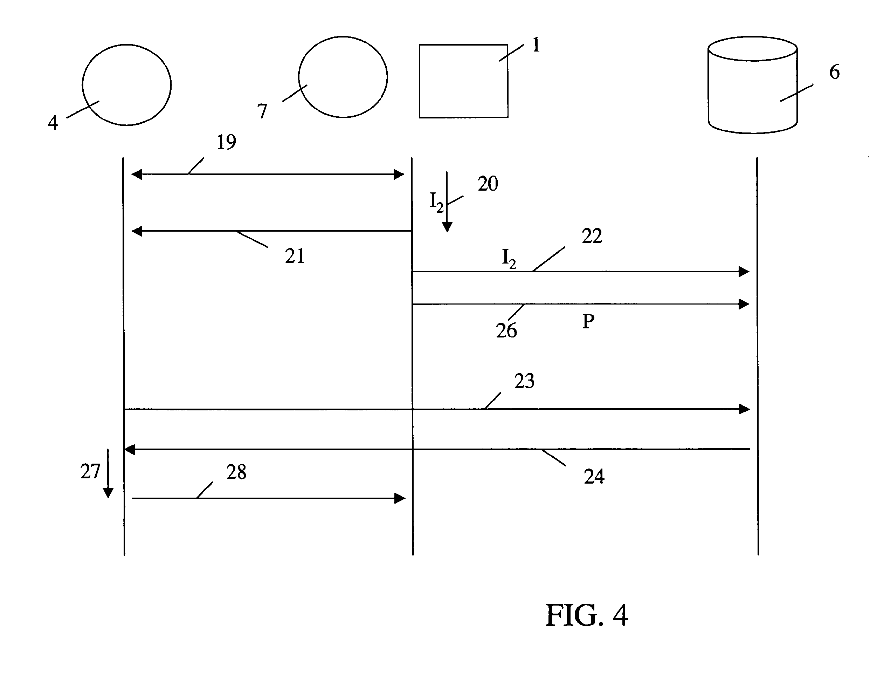

On décrit maintenant un deuxième mode de réalisation de l'invention en référence aux FIG. 3 et FIG. 4.

Dans ce mode de réalisation, l'équipement informatique 1 est associé à un utilisateur 7, et correspond par exemple à un téléphone mobile ou un ordinateur personnel ou un PDA. Ce mode nécessite également l'utilisation d'un serveur 6 comprenant une base de données. Le contenu de la base de données du serveur 6 est accessible par l'utilisateur 4 par l'intermédiaire d'un poste d'accès 31 comprenant un écran 32. Le poste d'accès 31 est par exemple un ordinateur personnel ou un téléphone mobile ou un PDA.

La FIG. 4 illustre un procédé d'authentification de l'équipement informatique 1 par l'utilisateur 4 dans ce deuxième mode de réalisation.

Dans une première étape 19, les deux utilisateurs 4 et 7 entrent en contact. Ce contact 19 correspond à une session de communication entre l'utilisateur 4 et l'utilisateur 7, muni de l'équipement 1. L'utilisateur décide alors de permettre à l'utilisateur 4 d'authentifier son équipement informatique 1.

Pour ce faire, Il utilise son équipement informatique 1 de sorte à générer un identifiant unique de session I₂. Cet identifiant unique de session I₂ est du type décrit précédemment, reconnaissable facilement par au moins un des cinq sens disponibles pour un être humain, et correspond de préférence à une image.

L'utilisateur fournit alors 21 cet identifiant à l'utilisateur 4. Lorsque l'équipement 1 est un téléphone mobile comprenant un écran 2, cette étape 21 est réalisée par une action de l'utilisateur 7, qui montre l'écran 2 de l'équipement 1 à l'utilisateur 4.

L'utilisateur 7 agit alors sur son équipement 5 de sorte à transmettre 22 l'identifiant unique I₂ au serveur 6. Cette étape de transmission 22 est par exemple réalisée par connexion et transmission de données entre l'équipement 5 et le serveur 6. L'équipement 5 transmet également 26 des paramètres P correspondant au contexte de la session de contact entre l'utilisateur 7 et l'utilisateur 4 et/ou à des paramètres personnels associés à l'utilisateur 7, comme par exemple son nom, son numéro de téléphone mobile ou son adresse personnelle.

Lorsque l'utilisateur 4, après avoir pris connaissance et mémorisé l'identifiant I₂, désire avoir plus d'information sur l'utilisateur 7, il se connecte 23 au serveur 6. Suite à cette connexion, le serveur 6 est agencé pour proposer à l'utilisateur 4, une recherche dans une base de données d'identifiants, correspondant par exemple à des images. L'utilisateur 4 va alors rechercher, parmi les images de cette base de données, l'image que lui avait fourni ou montré l'utilisateur 7. Les images de la base de données sont affichées à l'utilisateur 4 sur l'écran 32 du poste d'accès 31.

Cette base de données est par exemple organisée en différentes catégories afin de faciliter la recherche par l'utilisateur 4. Un type de catégorie peut voir été transmis au serveur 6 par l'utilisateur 7, en même temps que l'identifiant I₂. Si l'identifiant I₂ correspond à une image d'une fleur de type rose, l'utilisateur 7 aura par exemple transmis au serveur 6 la catégorie « fleur » en même temps que l'image de la rose.

L'utilisateur 4 indiquera alors au serveur 6 qu'il désire limiter sa recherche à la catégorie « fleur » et pourra donc retrouver facilement l'image de la rose transmise par l'utilisateur 7. L'utilisateur 4 peut également effectuer une recherche grâce à des données de contexte correspondant à son contact avec l'utilisateur 7.

Lorsque l'utilisateur 4 reconnaît l'identifiant I₂, il authentifie alors 27 l'équipement 1 sur lequel était affiché l'identifiant I₂. Une fois cette authentification réalisée, le serveur 6 transmet 24 les informations personnelles P de l'utilisateur 7 correspondant à l'identifiant I₂.

L'utilisateur 4 peut alors contacter 28 l'utilisateur 7.

Ce mode de réalisation de l'invention permet donc à l'utilisateur 7 de fournir des informations personnelles à l'utilisateur 4 sans divulguer directement ses données personnelles.

Dans les deux modes de réalisation décrits ci-dessus, afin de faciliter les authentifications de l'équipement 1 par l'utilisateur 4, l'utilisateur 4 et/ou l'utilisateur 7 peut spécifier que l'identifiant I₂ doit être généré dans une certaine catégorie. Par exemple, si les identifiants I₂ sont des images, les images générées peuvent être choisies de sorte à faciliter l'authentification. On peut alors spécifier que toutes les images générées doivent être dans la catégorie « fleur », ou dans la catégorie « personnage célèbre », et ce en fonction des préférences de l'utilisateur 4 effectuant l'authentification.

Dans les deux modes de réalisation décrits ci-dessus, lorsque les identifiants I₂ sont des images, celles-ci sont stockées dans une mémoire de l'équipement 1 et/ou de l'équipement 5. La génération de l'identifiant unique de session peut alors être réalisé d'abord par génération d'un code alphanumérique, correspondant par exemple à un mot de passe à usage unique, puis par appel d'une image en fonction de ce mot de passe à usage unique. De la sorte, un identifiant visuellement unique peut être généré pour chaque session entre l'utilisateur 4 et l'équipement informatique à authentifier 1.

## Revendications

1. Procédé d'authentification d'une session entre un premier utilisateur (4), et un équipement informatique à authentifier (1), ledit équipement informatique à authentifier (1) étant apte à générer des identifiants d'équipement informatique à authentifier, ledit procédé comprenant des étapes dans lesquelles:
- une session de communication est ouverte (10, 11, 13, 19) entre ledit équipement informatique à authentifier et ledit premier utilisateur ;
- ledit équipement informatique à authentifier génère (14, 20) un identifiant d'équipement informatique à authentifier, ledit identifiant étant fonction de ladite session ;
- ledit équipement informatique à authentifier fournit (15, 21) ledit identifiant d'équipement informatique à authentifier audit premier utilisateur ;
- ledit utilisateur authentifie (16, 27) ledit équipement informatique à authentifier en fonction dudit identifiant d'équipement informatique à authentifier (I₂);
**caractérisé en ce que**, ledit identifiant d'équipement informatique à authentifier (I₂) est un identifiant unique de ladite session.

2. Procédé selon la revendication 1 dans lequel ledit identifiant d'équipement informatique à authentifier est reconnaissable par ledit premier utilisateur à l'aide d'au moins un des cinq sens parmi la vue, le toucher, l'ouïe, l'odorat et le goût.

3. Procédé selon la revendication 1 dans lequel ledit identifiant unique d'équipement informatique à authentifier est une image.

4. Procédé selon l'une des revendications 1 à 3 dans lequel ledit procédé comprend des étapes dans lesquelles:
- ledit premier utilisateur sélectionne une catégorie d'identifiants ;
- ledit équipement informatique à authentifier génère ledit identifiant d'équipement informatique à authentifier, ledit identifiant d'équipement informatique à authentifier appartenant à ladite catégorie d'identifiants.

5. Procédé selon l'une quelconque des revendications précédentes, dans lequel ledit premier utilisateur (4) a un équipement informatique d'authentification (5) et ledit procédé comprend des étapes dans lesquelles:
- ledit équipement informatique d'authentification génère (12) un identifiant d'équipement informatique d'authentification (C);
- ledit identifiant d'équipement informatique d'authentification (C) est transmis (13) audit équipement informatique à authentifier;
- ledit équipement informatique à authentifier génère (14) ledit identifiant unique de session d'équipement informatique à authentifier (I₂) en fonction dudit identifiant d'équipement informatique d'authentification (C);
- ledit équipement informatique d'authentification génère (25) un identifiant unique de session d'équipement informatique d'authentification (I₁) en fonction dudit identifiant d'équipement informatique d'authentification (C);
procédé dans lequel lors de l'étape d'authentification (16), ledit utilisateur compare ledit identifiant unique de session d'équipement informatique d'authentification (I₁) et ledit identifiant unique de session d'équipement informatique à authentifier (I₂).

6. Procédé selon l'une des revendications 1 à 5, dans lequel ledit premier utilisateur (4) a un équipement informatique d'authentification (5) et dans lequel ledit équipement informatique d'authentification (5) comprend au moins une mémoire (7) dans laquelle est chargé un algorithme de génération d'identifiant de session d'équipement informatique d'authentification, ledit équipement informatique à authentifier comprend au moins une mémoire (3) dans laquelle est chargé un algorithme de génération d'identifiant de session d'équipement informatique à authentifier, ledit algorithme de génération d'identifiant d'équipement informatique d'authentification et ledit algorithme de génération d'identifiant d'équipement informatique à authentifier étant identiques, et dans lequel ledit procédé comprend des étapes dans lesquelles :
- ledit algorithme de génération d'identifiant de session d'équipement informatique d'authentification génère (25) ledit identifiant de session d'équipement informatique d'authentification ;
- ledit algorithme de génération d'identifiant de session d'équipement informatique à authentifier génère (14) ledit identifiant de session d'équipement informatique à authentifier.

7. Procédé selon la revendication 1 dans lequel ledit équipement informatique à authentifier est détenu par un deuxième utilisateur (7) ayant des paramètres de deuxième utilisateur (P), ledit procédé comprenant des étapes dans lesquelles:
- ledit équipement informatique à authentifier transmet (22, 26) ledit identifiant unique de session d'équipement informatique à authentifier (I₂) à un équipement informatique de recherche (6) ainsi que lesdits paramètres de deuxième utilisateur (P), lesdits paramètres de deuxième utilisateur étant associés de façon unique audit identifiant unique de session d'équipement informatique à authentifier ;
- ledit premier utilisateur recherche (23) au niveau dudit équipement informatique de recherche, ledit deuxième identifiant unique de session d'équipement informatique à authentifier ;
- ledit équipement informatique de recherche fournit (24) audit premier utilisateur (4) lesdits paramètres de deuxième utilisateur associés audit deuxième identifiant unique de session d'équipement informatique à authentifier.
